# EUROPÄISCHE PATENTSCHRIFT

(11) **EP 0 508 436 B1**
(45) Veröffentlichungstag und Bekanntmachung des Hinweises auf die Patenterteilung: **13.07.1994**
(21) Anmeldenummer: 92106186.7
(22) Anmeldetag: 09.04.1992
(51) Int. Cl.: B62K 25/02, B62K 21/24, B62K 19/36

(54) **Schnellspanner für ein Fahrrad**
Quick-release mechanism for a bicycle
Dispositif de blocage rapide pour une bicyclette

(30) Priorität: 11.04.1991 DE 9104431 U
(43) Veröffentlichungstag der Anmeldung: 14.10.1992
(73) Patentinhaber: K.W. HOCHSCHORNER GMBH, D-82152 Planegg (DE)
(72) Erfinder: Zoor, Reinhold, W-8031 Eichenau (DE)
(74) Vertreter: Heim, Hans-Karl, Dipl.-Ing.

(56) Entgegenhaltungen:
- DE-C- 808 188
- FR-A- 765 394
- GB-A- 658 011
- NL-A- 8 400 540
- US-A- 2 778 083

## Beschreibung

Die Erfindung betrifft einen Schnellspanner für ein Fahrrad, mit wenigstens einem Exzenter-Nocken, der eine Lagerbohrung aufweist, in der er auf einer Welle drehbar gelagert ist, die an einem Bauteil angebracht ist, welches mit Hilfe des Exzenter-Nockens an einem Fahrrad festklemmbar ist, wobei der Exzenter-Nocken mit einem Handhebel in die Klemmstellung zu drehen und/oder durch eine gegenläufige Drehbewegung aus der Klemmstellung zu lösen ist. Ein solcher Schnellspanner ist aus den Dokument DE-C-808188 bekannt.

Ein derartiger Schnellspanner für ein Fahrrad ist auch aus dem Katalog "Taiwan Bicycles & Parts Guide (TBG)" - 1990-91 bekannt, der von der Trade Winds Inc., P.O.Box 7-179, Taipei 10602, TAIWAN, R.O.C., herausgegeben und veröffentlicht wurde. Solche Schnellspanner dienen dem Zweck, verschiedenartige Bauteile an einem Fahrrad festzuklemmen. Beispielsweise kann die Nabe eines Rades in einer Gabel festgeklemmt werden. Ein solcher Schnellspanner kann auch dazu verwendet werden, einen Lenker an einer Befestigungsstange festzuklemmen. Weiterhin könnte auch beispielsweise ein auf einer Stange montierter Sattel an einem Trägerrohr festgeklemmt werden. Es ist auch denkbar, daß andere Bauteile jeweils mit Hilfe eines Schnellspanners der eingangs genannten Art an einem Fahrrad verklemmt werden.

Die erfindungsgemäße Vorrichtung kann auch grundsätzlich dazu dienen, ein Bauteil an einem anderen Gegenstand als einem Fahrrad festzuklemmen. Die erfindungsgemäße Vorrichtung kann grundsätzlich überall dort eingesetzt werden, wo es erforderlich ist, ein Bauteil mit Hilfe eines Exzenter-Nockens an einem Gegenstand festzuklemmen, wenn der Exzenter-Nocken mit Hilfe eines Handhebels betätigt wird.

Die bekannten Schnellspanner sind zwar dazu geeignet, eine hinreichend zuverlässige Befestigung zu ermöglichen, sind jedoch verhältnismäßig schwer und in der Herstellung teuer, weil verhältnismäßig hohe Werkzeugkosten entstehen, um ein geeignetes Werkzeug herzustellen. Außerdem lassen sich die Handhebel der bekannten Schnellspanner kaum mit erträglichem wirtschaftlichem Aufwand den jeweiligen Erfordernissen des bestimmten Verwendungszweckes hinreichend flexibel anpassen, weil durch an sich gewünschte Abwandlungen der Form eines solchen Handhebels Werkzeugkosten entstehen würden, die vor allem für kleinere Serien nicht rentabel wären.

Der Erfindung liegt die **Aufgabe** zugrunde, einen Schnellspanner der eingangs näher genannten Art zu schaffen, welcher bei besonders wirtschaftlicher Fertigung und Montage ein sehr geringes Gewicht aufweist und zugleich in seiner Form außerordentlich leicht an eine bestimmte Fahrrahmen-Form oder andere Form-Erfordernisse angepaßt werden kann.

Zur Lösung dieser Aufgabe sieht die Erfindung vor, daß der Handhebel als Drahtbügel ausgebildet ist, daß der Drahtbügel im wesentlichen eine U-Form aufweist, daß die beiden freien Enden der U-Schenkel jeweils in einer Bügel-Befestigungsbohrung im Exzenter-Nocken angeordnet sind und eine Hohlkehle aufweisen, welche die Welle umgreift, durch die der Drahtbügel im Exzenter-Nocken fixiert ist und daß der Drahtbügel aus einem biegesteifen Material besteht.

Der Drahtbügel kann leicht und wirtschaftlich gefertigt und dabei zugleich in seiner Form verschiedensten Gegebenheiten und Wünschen angepaßt werden. Insbesondere sind die Werkzeugkosten für die Herstellung eines erfindungsgemäßen Drahtbügels außerordentlich gering. Die Montage gestaltet sich auch besonders einfach dadurch, daß der Drahtbügel nur in eine Bügel-Befestigungsbohrung im Exzenter-Nocken eingeführt und anschließend dadurch in dieser Lage gehalten wird, daß nachträglich die Welle in den Exzenter-Nocken eingeführt wird, welche über die Hohlkehle im Drahtbügel eine sichere und präzise Befestigung des Drahtbügels im Exzenter-Nocken gewährleistet.

Gemäß einer bevorzugten Ausführungsform des Erfindungsgegenstandes ist vorgesehen, daß zwei Exzenter-Nocken vorhanden sind, die beiderseits des Bauteils angeordnet sind, welches an einem Fahrrad festklemmbar ist. Auf diese Weise wird einerseits der Drahtbügel zuverlässig und kippsicher gegenüber der Welle fixiert, und es wird andererseits durch die beiden Exzenter-Nocken eine zuverlässige Verklemmung und damit eine betriebssichere Befestigung des Bauteils am Fahrrad erreicht.

Um die Form des Drahtbügels bestimmten Formerfordernissen anzupassen, kann vorzugsweise vorgesehen sein, daß die durch die beiden U-Schenkel des Drahtbügels definierte Fläche im wesentlichen L-förmig abgekantet ist.

In einer alternativen bevorzugten Ausführungsform kann die Anordnung derart getroffen sein, daß die durch die beiden U-Schenkel des Drahtbügels definierte Fläche die Form eines Zylindermantel-Segmentes aufweist. Es lassen sich auf diese Weise vielfältige Abwandlungen der Form des Drahtbügels finden und gestalten, welche an Verwendungszweck und sonstige an einem Fahrrad vorhandene Gegebenheiten eine optimale Anpassung der Bügelform ermöglichen. Es ist offensichtlich, daß die Formgebung für den erfindungsgemäßen Drahtbügel mit sehr geringem technischem Aufwand möglich ist, um auf diese Weise eine optimale Flexibilität in der Gestaltungsform zu bieten.

Es kann vorzugsweise auch vorgesehen sein, daß die U-Form des Drahtbügels im Bereich des U-Querschenkels C-förmig aufgeweitet ist. Eine derartige Form kann in vielen Fällen zweckmäßig sein, um die Handhabung des Drahtbügels griffsicher zu gestalten.

Weiterhin kann eine bevorzugte Ausführungsform des Erfindungsgegenstandes auch darin bestehen, daß die U-Form des Drahtbügels im Bereich des U-Querschenkels birnenförmig aufgeweitet ist. Vorteilhaft erweist sich eine solche Ausführungsform bei bestimmten Formerfordernissen und auch dazu, bei der Handhabung des Drahtbügels eine erhebliche Kraft anwenden zu können.

Um dem erfindungsgemäßen Drahtbügel eine große Biegesteifigkeit zu verleihen, kann vorzugsweise vorgesehen sein, daß der Drahtbügel aus Metall besteht. Dabei erweist es sich insbesondere als zweckmäßig, daß der Drahtbügel aus Federstahldraht besteht.

Einen guten Kompromiß zwischen Biegesteifigkeit einerseits und geringem Gewicht andererseits bietet eine Ausführungsform des Drahtbügels, welche sich dadurch auszeichnet, daß der Durchmesser der U-Schenkel des Drahtbügels drei bis vier Millimeter beträgt.

Eine ästhetisch besonders ansprechende Gestaltung des Erfindungsgegenstandes sieht vor, daß der Drahtbügel mit einem Kunststoff-Überzug versehen ist. Dadurch wird auch die Handhabung angenehmer, und es läßt sich durch unterschiedliche Färbung der verschiedenen Kunststoff-Überzüge ein optimales optisches Bild schaffen.

Gemäß der Erfindung ist somit der wesentliche technische Fortschritt erreichbar, daß durch besonders wirtschaftliche Herstellung des Erfindungsgegenstandes auch bei relativ kleinen Serien wegen minimaler Werkzeugkosten eine optimale Anpassungsfähigkeit in der Formgebung erreicht und zugleich ein sehr geringes Gewicht gewährleistet werden kann.

Die Erfindung wird nachfolgend beispielsweise anhand der Zeichnung beschrieben; in dieser zeigen:
- Fig. 1: eine Draufsicht auf einen erfindungsgemäßen Schnellspanner,
- Fig. 2a: einen Schnitt entlang der Linie A-A in der Fig.1,
- Fig. 2b: ein Anwendungsbeispiel anhand der Schnittdarstellung gemäß Fig. 2a,
- Fig. 3: eine Draufsicht auf eine zweite Ausführungsform des Erfindungsgegenstandes,
- Fig. 4: einen Schnitt entlang der Linie B-B in der Fig. 3,
- Fig. 5: eine Draufsicht auf eine dritte Ausführungsform des Erfindungsgegenstandes und
- Fig. 6: einen Schnitt entlang der Linie C-C in der Fig. 5.

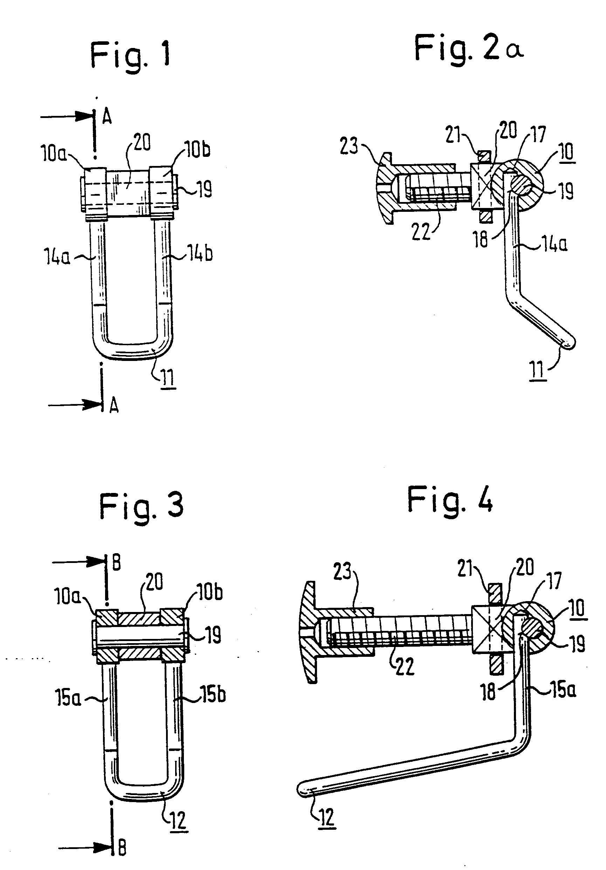

Die Figuren 1 und 2a, 2b der Zeichnung zeigen eine erste Ausführungsform des erfindungsgemäßen Schnellspanners. Diese erste Ausführungsform des Erfindungsgegenstandes zeichnet sich dadurch aus, daß ein an zwei Exzenter-Nocken 10a und 10b angebrachter Drahtbügel 11 im wesentlichen L-förmig abgewinkelt ist. Genauer gesagt, es ist diejenige Fläche, welche durch die beiden U-Schenkel 14a und 14b des Drahtbügels 11 festgelegt wird, im wesentlichen L-förmig abgekantet, wie es die Fig. 2a,2b deutlich erkennen lassen. Die beiden L-Schenkel bilden in dieser Anordnung einen stumpfen Winkel miteinander. Wie die Fig. 2a, 2b weiterhin erkennen lassen, sind die beiden L-Schenkel des Drahtbügels 11 im wesentlichen gleich lang.

Aus Fig. 2a, 2b ist weiterhin ersichtlich, daß die beiden freien Enden der U-Schenkel 14a und 14b in jeweils einer Bügel-Befestigungsbohrung 17 in den beiden Exzenter-Nocken 10a und 10b angeordnet sind, die in Fig. 2a, 2b allgemein und gemeinsam mit 10 bezeichnet sind. In den U-Schenkeln 14a und 14b ist jeweils in demjenigen Bereich, mit welchem die U-Schenkel 14a und 14b in der Bügel-Befestigungsbohrung 17 angeordnet sind, eine Hohlkehle 18 ausgearbeitet. Diese Hohlkehle 18 ist in der Weise ausgebildet und an den beiden U-Schenkeln 14a und 14b angebracht, daß ihre Wandung mit der Wand der Bügel-Befestigungsbohrung 17 fluchtet. Es läßt sich also eine Welle 19 in die Bügel-Befestigungsbohrung 17 einführen, und zwar in der Weise, daß die Welle 19 in die Hohlkehle 18 eingreift auf diese Weise wird der Drahtbügel 11 mit Hilfe der Hohlkehle 18 in der Bügel-Befestigungsbohrung 17 und damit im Exzenter-Nocken 10 formschlüssig fixiert.

Die Figur 1 läßt erkennen, daß die Welle 19 mit ihren beiden Enden, aus den Exzenter-Nocken 10a und 10b beiderseits herausragen, vernietet ist, um die Welle 19 auf diese Weise zu fixieren. Natürlich kann auch eine andere Art der Fixierung praktisch verwendet werden.

Aus den Fig. 1 und 2a, 2b ist bei gemeinsamer Betrachtung auch ersichtlich, daß die Welle 19 nicht nur die beiden Exzenter-Nocken 10a und 10b durchsetzt, sondern auch ein zwischen diesen beiden Exzenter-Nocken 10a und 10b angeordnetes Bauteil 20. An diesem Bauteil 20 ist gemäß der Darstellung in Fig. 2a, 2b ein Gewindebolzen 22 angesetzt, auf dem eine Hutmutter 23 aufgeschraubt ist. Außerdem wird das Bauteil 20 von einer Beilagscheibe 21 umgeben, an welcher der Exzenter-Nocken 10 anliegt.

Grundsätzlich wird gemäß der Darstellung in Fig. 2a, 2b die Beilagscheibe 21 nach links verschoben, wenn der Exzenter-Nocken 10 im Uhrzeigersinn gedreht wird. Wenn man sich vorstellt, daß links von der Beilagscheibe 21 sich ein (nicht dargestelltes) Teil eines Fahrrades oder eines anderen Gegenstandes befindet, wird erkennbar, daß bei einer Bewegung des Drahtbügels 11 im Uhrzeigersinn, welche auch den Exzenter-Nocken 10 im Uhrzeigersinn mitnimmt, durch die nach links gerichtete Bewegung der Beilagscheibe 21 die Möglichkeit besteht, diese Beilagscheibe gegen ein solches (nicht dargestelltes) Teil zu drücken und dagegen zu verklemmen.

Es versteht sich, daß die oben beschriebene Verklemmung dadurch gelöst werden kann, daß der Drahtbügel 11 und somit auch der Exzenter-Nocken 10 gegen den Uhrzeigersinn gedreht wird.

Es bedarf für den Fachmann keiner weiteren weiteren Erläuterung, daß sich für den in den Fig. 1 und 2a, 2b dargestellten Schnellspanner an einem Fahrrad, an einem anderen Fahrzeug, an einem anderen Gerät und allgemein in der Technik vielfältige Anwendungsmöglichkeiten bieten, und zwar stets dann, wenn mit Hilfe eines mit Hand betätigbaren Hebels eine Verklemmung herbeigeführt werden soll.

Anhand der Fig. 2b wird nachfolgend die Funktion des Schnellspanners anhand eines Beispiels erläutert. In diesem Beispiel werden zwei Rohrstücke 8,9, welche jeweils eine durchgehende Querbohrung bzw. Langlöcher 6,7 aufweisen, miteinander verbunden. Ausgehend von der Konstellation in Fig. 2a wird zunächst die Hutmutter 23 vom Gewindebolzen 22 abgeschraubt. Der Drahtbügel 11 wird entgegen der Uhrzeigerrichtung um 180° nach oben verschwenkt, so daß der Exzenternocken 10 in seine Offenstellung gebracht wird. Die Beilagscheibe 21 kann dann nach rechts verschoben werden. Es werden dann die beiden Rohrstücke 8,9 auf den Gewindebolzen 22 aufgesteckt und die Hutmutter 23 bis zum Anschlag aufgeschraubt. Anschließend wird der Drahtbügel 11 in Uhrzeigerrichtung in die dargestellte Position gebracht. Dabei drückt der Exzenternocken 10 die Scheibe 21 nach links und preßt die beiden Rohrstücke 8,9 so fest zusammen, daß sie ihre Relativposition beibehalten.

In den Figuren 3 und 4 sind Bauteile, welche entsprechenden Bauteilen in den Fig.1 bzw. 2a, 2b zugeordnet werden können, mit gleichen Bezugszeichen versehen.

Der wesentliche Unterschied der in den Figuren 3 und 4 dargestellten Ausführungsform des erfindungsgemäßen Schnellspanners gegenüber dem in den Fig.1 und 2a, 2b dargestellten Ausführungsbeispiel besteht darin, daß ein Drahtbügel 12 vorgesehen ist, der eine andere Form als der Drahtbügel 11 aufweist. Auch der Drahtbügel 12 ist im wesentlichen L-förmig gestaltet. Während bei dem Ausführungsbeispiel in den Fig. 1 und 2a, 2b der untere Abschnitt des Drahtbügels 11 nach rechts abgewinkelt ist und relativ kurz ausgebildet ist, ist die Anordnung gemäß den Figuren 3 und 4 derart getroffen, daß der untere Bereich des Drahtbügels 12 nach links abgewinkelt und relativ lange ausgebildet ist. Außerdem weisen die beiden L-Schenkel bei dem Drahtbügel 12 einen etwas kleineren Winkel zueinander auf als bei der Ausführungsform in den Fig. 1 oder 2a, 2b, bei welcher der Drahtbügel mit 11 bezeichnet ist. Es ist bei der Ausführungsform gemäß den Figuren 3 und 4 zwischen den beiden Bereichen des Drahtbügels 12 ein Winkel vorgesehen, der nur wenig größer ist als ein rechter Winkel.

Es versteht sich, daß sowohl die Größe des Winkels als auch die Länge der Bereiche bei den L-förmig gestalteten Drahtbügeln 11 und 12 beliebig abgewandelt und jeweiligen Formerfordernissen flexibel angepaßt werden kann, ohne den Grundgedanken der Erfindung zu verlassen.

Es könnten beispielsweise die beiden U-Schenkel 15a und 15b im Unterschied zu der in den Figuren 3 und 4 dargestellten Form auch mehrfach abgewinkelt sein.

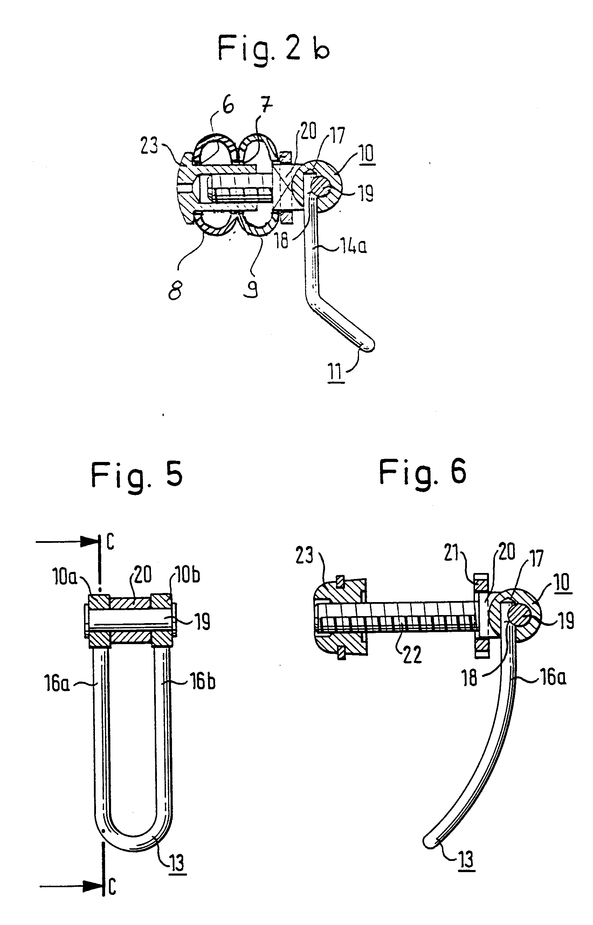

Die Figuren 5 und 6 veranschaulichen eine weitere Ausführungsform des erfindungsgemäßen Schnellspanners, welche sich von den vorangegangenen Ausführungsformen, bei denen die Drahtbügel 11 und 12 abgewinkelt waren, im wesentlichen dadurch unterscheidet, daß ein Drahtbügel 13 vorgesehen ist, dessen U-Schenkel 16a und 16b eine gerundete Form aufweisen. Genauer gesagt, die durch die beiden U-Schenkel 16a und 16b festgelegte Fläche bildet ein Segment eines Kreiszylindermantels. Es versteht sich, daß vielfältige Abwandlungen und damit unterschiedliche Rundungen für die U-Schenkel 16a und 16b verwendet werden können. Anstatt einer Zylindermantel-Fläche könnte auch eine Fläche verwendet werden, die beispielsweise einen S-Schwung aufweist.

Schließlich ist es gemäß der Erfindung auch möglich, abgewinkelte Bauformen gemäß der Darstellung in den Figuren 1 bis 4 mit gerundeten Bauformen gemäß der Darstellung in den Figuren 5 und 6 miteinander zu kombinieren, um die Form der Drahtbügel 11,12 und 13 optimal Konstruktionswünschen und Formerfordernissen anzupassen.

## Patentansprüche

1. Schnellspanner für ein Fahrrad, mit wenigstens einem Exzenter-Nocken (10), der eine Lagerbohrung aufweist, in der er auf einer Welle (19) drehbar gelagert ist, die an einem Bauteil (20) angebracht ist, welches mit Hilfe des Exzenter-Nockens (10) an einem Fahrrad festklemmbar ist, wobei der Exzenter-Nocken (10) mit einem Handhebel in die Klemmstellung zu drehen und/oder durch eine gegenläufige Drehbewegung aus der Klemmstellung zu lösen ist,
dadurch **gekennzeichnet**,
daß der Handhebel als Drahtbügel (11,12,13) ausgebildet ist,
daß der Drahtbügel (11,12,13) im wesentlichen eine U-Form aufweist,
daß die beiden freien Enden der U-Schenkel (14,15,16) jeweils in einer Bügel-Befestigungsbohrung (17) im Exzenter-Nocken (10) angeordnet sind und eine Hohlkehle (18) aufweisen, welche die Welle (19) umgreift, durch die der Drahtbügel (11,12,13) im Exzenter-Nocken (10) fixiert ist, und
daß der Drahtbügel (11,12,13) aus einem biegesteifen Material besteht.

2. Schnellspanner nach Anspruch 1,
dadurch **gekennzeichnet,**
daß zwei Exzenter-Nocken (10a,10b) vorhanden sind, die beiderseits des Bauteils (20) angeordnet sind, welches an einem Fahrrad festklemmbar ist wobei jeweils eines der beiden Enden der U-Schenkel in einem Exzenter-Nocken fixiert ist.

3. Schnellspanner nach einem der Ansprüche 1 oder 2,
dadurch **gekennzeichnet,**
daß die durch die beiden U-Schenkel (14,15) des Drahtbügels (11,12) definierte Fläche im wesentlichen L-förmig abgekantet ist (Fig. 2 und 4).

4. Schnellspanner nach Anspruch 1 oder 2,
dadurch **gekennzeichnet,**
daß die durch die beiden U-Schenkel (16) des Drahtbügels (13) definierte Fläche die Form eines Zylindermantel-Segmentes aufweist (Fig. 6).

5. Schnellspanner nach einem der vorhergehenden Ansprüche,
dadurch **gekennzeichnet,**
daß die U-Form des Drahtbügels im Bereich des U-Querschenkels C-förmig aufgeweitet ist.

6. Schnellspanner nach einem der Ansprüche 1 bis 4,
dadurch **gekennzeichnet,**
daß die U-Form des Drahtbügels im Bereich des U-Querschenkels birnenförmig aufgeweitet ist.

7. Schnellspanner nach einem der vorhergehenden Ansprüche,
dadurch **gekennzeichnet,**
daß der Drahtbügel (11,12,13) aus Metall besteht.

8. Schnellspanner nach einem der Ansprüche 1 bis 6,
dadurch **gekennzeichnet,**
daß der Drahtbügel (11,12,13) aus Federstahl besteht.

9. Schnellspanner nach einem der vorhergehenden Ansprüche,
dadurch **gekennzeichnet,**
daß der Durchmesser der U-Schenkel (14,15,16) des Drahtbügels (11,12,13) etwa drei bis vier Millimeter beträgt.

10. Schnellspanner nach einem der vorhergehenden Ansprüche,
dadurch **gekennzeichnet,**
daß der Drahtbügel (11,12,13) mit einem Kunststoff-Überzug versehen ist.

## Claims

1. Quick release for a bicycle, with at least one eccentric cam (10) having a bearing bore in which it is rotatably mounted on a shaft (19), which is fitted to a component (20), which with the aid of the eccentric cam (10) can be fixed to a bicycle, the eccentric cam (10) being rotatable with a hand lever into the clamped position and/or by a rotary movement in the opposite direction can be released from the clamped position,
**characterized** in that
the hand lever is constructed as a wire shackle (11, 12, 13),
the wire shackle (11, 12, 13) is substantially U-shaped,
the two free ends of the U-legs (14, 15, 16) are in each case located in a shackle fixing bore (17) in the eccentric cam (10) and have a channel (18), which engages round the shaft (19) fixing the wire shackle (11, 12, 13) in the eccentric cam (10), and
that the wire shackle (11, 12, 13) is made from a flexurally rigid material.

2. Quick release according to claim 1,
**characterized** in that
there are two eccentric cams (10a, 10b) on either side of the component (20), which can be fixed to a bicycle, wherein each one of both ends of the U-legs is fixed in an eccentric cam.

3. Quick release according to claim 1 or 2,
**characterized** in that
the surface defined by the two U-legs (14, 15) of the wire shackle (11, 12) is bent in substantially L-shaped manner (fig. 2 and 4).

4. Quick release according to claim 1 or 2,
**characterized** in that
the surface defined by the two U-legs (16) of the wire shackle (13) is shaped like a cylindrical surface segment (fig. 6).

5. Quick release according to one of the preceding claims,
**characterized** in that
the U-shape of the wire shackle is expanded in C-shaped manner in the vicinity of the U-cross-arm.

6. Quick release according to one of the claims 1 to 4,
**characterized** in that
the U-shape of the wire shackle is expanded in pear-shaped manner in the vicinity of the U-cross-arm.

7. Quick release according to one of the preceding claims,
**characterized** in that
the wire shackle (11, 12, 13) is made from metal.

8. Quick release according to one of the claims 1 to 6,
**characterized** in that
the wire shackle (11, 12, 13) is made from spring steel.

9. Quick release according to one of the preceding claims,
**characterized** in that
the diameter of the U-legs (14, 15, 16) of the wire shackle (11, 12, 13) is approximately 3 to 4 mm.

10. Quick release according to one of the preceding claims,
**characterized** in that
the wire shackle (11, 12, 13) is provided with a plastic covering.

## Revendications

1. Dispositif de blocage rapide pour une bicyclette, comprenant au moins une came à excentrique (10) qui présente un trou par lequel elle est montée en rotation sur un arbre (19) fixé à un composant (20) qui doit être bloqué sur une bicyclette à l'aide de la came à excentrique (10), la came à excentrique (10) étant tournée en position de blocage à l'aide d'un levier à main et/ou libérée de la position de blocage par un mouvement de rotation en sens inverse, **caractérisé** par le fait
que le levier à main est réalisé sous la forme d'un étrier de fil (11, 12, 13),
que l'étrier de fil (11, 12, 13) présente essentiellement une forme en U,
que l'extrémité libre de chacune des deux branches (14, 15, 16) du U est disposée dans un trou de fixation d'étrier (17) dans la came à excentrique (10) et présente une gorge (18) qui entoure l'arbre (19) par lequel l'étrier de fil (11, 12, 13) est fixé dans la came à excentrique (10), et
que l'étrier de fil (11, 12, 13) est constitué par un matériau rigide en flexion.

2. Dispositif de blocage rapide suivant la revendication 1, **caractérisé** par le fait qu'il comprend deux cames à excentrique (10a, 10b) qui sont disposées de part et d'autre du composant (20) qui doit être bloqué sur une bicyclette, l'extrémités de chacune des deux branches du U étant fixée dans une came à excentrique.

3. Dispositif de blocage rapide suivant l'une des revendications 1 ou 2, **caractérisé** par le fait que la surface définie par les deux branches (14, 15) du U de l'étrier de fil (11, 12) est coudée essentiellement en L (figures 2 et 4).

4. Dispositif de blocage rapide suivant la revendication 1 ou 2, **caractérisé** par le fait que la surface définie par les deux branches (16) du U de l'étrier de fil (13) présente la forme d'un segment d'enveloppe de cylindre (figure 6).

5. Dispositif de blocage rapide suivant l'une des revendications précédentes, **caractérisé** par le fait que la forme en U de l'étrier de fil est élargie en C dans la zone de la branche transversale du U.

6. Dispositif de blocage rapide suivant l'une des revendications 1 à 4, **caractérisé** par le fait que la forme en U de l'étrier de fil est élargie en forme de poire dans la zone de la branche transversale du U.

7. Dispositif de blocage rapide suivant l'une des revendications précédentes, **caractérisé** par le fait que l'étrier de fil (11, 12, 13) est en métal.

8. Dispositif de blocage rapide suivant l'une des revendications 1 à 6, **caractérisé** par le fait que l'étrier de fil (11, 12, 13) est en acier à ressort.

9. Dispositif de blocage rapide suivant l'une des revendications précédentes, **caractérisé** par le fait que le diamètre des branches (14, 15, 16) du U de l'étrier de fil (11, 12, 13) s'élève à environ 3 à 4 mm.

10. Dispositif de blocage rapide suivant l'une des revendications précédentes, **caractérisé** par le fait que l'étrier de fil (11, 12, 13) est muni d'un revêtement en matière plastique.
